# EUROPÄISCHE PATENTSCHRIFT

(11) **EP 0 833 150 B1**
(45) Veröffentlichungstag und Bekanntmachung des Hinweises auf die Patenterteilung: **26.11.2003**
(21) Anmeldenummer: 97116519.6
(22) Anmeldetag: 23.09.1997
(51) Int. Cl.: G01N 27/90

(54) **Messverfahren und Messvorrichtung zur Materialcharakterisierung von Halbzeugen und Maschinenbauteilen**
Method and device for measuring the material characteristics of semi-finished products and parts
Méthode et appareil pour la mesure des caractéristiques de matériaux semi-fini et des pièces des machines

(30) Priorität: 27.09.1996 DE 19640033
(43) Veröffentlichungstag der Anmeldung: 01.04.1998
(73) Patentinhaber: Reimche, Wilfried, Dr.-Ing., 31515 Wunstorf/Luthe (DE); Stegemann, Dieter, Prof. Dr.-Ing., 30171 Hannover (DE); Feiste, Karsten Lothar, Dipl.-Ing., 30169 Hannover (DE)
(72) Erfinder: Reimche, Wilfried, Dr.-Ing., 31515 Wunstorf/Luthe (DE); Stegemann, Dieter, Prof. Dr.-Ing., 30171 Hannover (DE); Feiste, Karsten Lothar, Dipl.-Ing., 30169 Hannover (DE)
(74) Vertreter: Patentanwälte Thömen & Körner

(56) Entgegenhaltungen:
- EP-A- 0 368 762
- GB-A- 2 035 571
- US-A- 4 799 010
- US-A- 5 144 565
- SABLIK M.J. ET AL: 'A model for the effect of stress on the low-frequency harmonic content of the magnetic induction in ferromagnetic materials' J. APPL. PHYS. Bd. 63, Nr. 8, 15 April 1988, USA, Seiten 3930 - 3932
- KWUN H.; BURKHARDT G.L.: 'Nondestructive measurement of stress in ferromagnetic steels using harmonic analysis of induced voltage' NDT INTERNATIONAL Bd. 20, Nr. 3, Juni 1987, Seiten 167 - 171

## Beschreibung

Die Erfindung betrifft ein Verfahren zur Prüfung von Halbzeugen und Maschinenbauteilen aus ferromagnetischen Werkstoffen unter Analyse von Wirbelstromsignalen nach dem Oberbegriff des Anspruchs 1 und eine entsprechende Vorrichtung nach dem Oberbegriff des Anspruchs 8.

Erhöhte Anforderungen des Marktes an die Produktqualität bei zunehmendem Kostendruck erfordern Maßnahmen zur Qualitätssicherung in der Fertigung und Verarbeitung von Halbzeugen und Maschinenbauteilen. Wichtige mechanisch-technologische Materialeigenschaften resultieren aus der chemischen Zusammensetzung und Legierungszusammensetzung des Materials sowie der Gefügeausbildung und Kornstruktur und werden im Verlauf der Fertigung durch Umformung und Wärmebehandlungsprozesse geprägt.

Die Ausbildung des Gefüges und der kristallographischen Textur ist von unmittelbarem Einfluss. Bestehende Zusammenhänge zwischen mechanisch-technologischen Eigenschaften und physikalischen Messgrößen, wie z.B. dem Kohlenstoffgehalt, der magnetischen Härte und der mechanischen Härte sind seit langem bekannt. Sie sind dabei der Ansatzpunkt für die Entwicklung zerstörungsfreier Meßverfahren für ferromagnetische Werkstoffe, wie die Harmonischen- oder Oberwellenanalyse von Wirbelstromsignalen. Bei diesem indirekten elektromagnetischen Prüfverfahren werden von ferromagnetischen Werkstoffeigenschaften abhängige Messgrößen ermittelt und über bestehende physikalische Zusammenhänge mechanisch-technologische Werkstoffkennwerte bestimmt. Trotz dieser Kenntnisse gibt es aber bisher keine allgemeingültigen Theorien, die die Zusammenhänge zwischen den elektromagnetischen Eigenschaften und dem mikrostrukturellen Aufbau der Materialien umfassend beschreiben.

So hat es sich gezeigt, dass unterschiedliche mechanisch-technologische Eigenschaften der Werkstoffzusammensetzung und Werkstoffstruktur teilweise gleichsinnige oder gegensinnige Änderungen einer Harmonischen bewirken und daher schwer unterscheidbar sind, wenn Veränderungen mehrerer mechanischtechnologischer Eigenschaften gleichzeitig eingetreten sind. Dann sind allenfalls noch qualitative Angaben der mechanisch-technologischen Werkstoffkennwerte gegenüber Vergleichswerkstoffen möglich, keinesfalls aber quantitative Angaben.

Aus der US-A 5 144 565 ist ein Verfahren und eine Vorrichtung zur Messung der metallurgischen Eigenschaften von ferromagnetischen Prüflingen mit Hilfe von Wirbelströmen bekannt. Es wird ein gepulstes Erregersignal eingespeist und die geradzahligen Harmonischen werden ausgewertet.

Der Erfindung liegt die Aufgabe zugrunde, ein Verfahren und eine Vorrichtung zur Prüfung von Halbzeugen und Maschinenbauteilen aus ferromagnetischen Werkstoffen unter Analyse von Wirbelstromsignalen dahingehend zu verbessern, dass eine quantitative Bestimmung unterschiedlicher mechanischtechnologischer Werkstoffkennwerte ermöglicht wird.

Diese Aufgabe wird bei einem Verfahren nach dem Oberbegriff des Anspruchs 1 und einer Vorrichtung nach dem Oberbegriff des Anspruchs 8 mit den kennzeichnenden Merkmalen des jeweiligen Anspruchs gelöst.

Weiterbildungen und vorteilhafte Ausgestaltungen der Erfindung ergeben sich aus den Unteransprüchen.

Das Messprinzip magnetinduktiver Verfahren, zu der die bei der Erfindung angewandte Wirbelstromprüfung zuzurechnen ist, beruht auf der Veränderung eines von einer Erregerspule erzeugten elektromagnetischen Feldes durch die Überlagerung eines Sekundärfeldes, welches aus der Wirbelstromverteilung und den Ummagnetisierungsvorgängen im Prüfkörper resultiert. Änderungen in den elektromagnetischen Eigenschaften äußern sich dabei im Betrag und der Phase des Messsignals. Außerdem ist bei ferromagnetischen Materialien in Abhängigkeit der Prüffrequenz und magnetischen Feldstärke das Messsignal von der Form der durchlaufenen Hystereseschleife abhängig.

Bedingt durch Nichtlinearitäten in der Hystereseschleife werden phasenverschobene Harmonische und Oberwellen der Prüffrequenz im Messsignal induziert, welche in charakteristischer Weise vom Materialzustand abhängig sind. Durch eine Variation der Prüffrequenz ist eine Änderung der Eindringtiefe im Material und eine Separierung von Information aus dem Grundwerkstoff und dem Oberflächenbereich zu erreichen. Bei der Anwendung einer Mehrfrequenz-Wirbelstromprüfung ergibt sich eine Vielzahl von Messgrößen, welche signifikant im Zusammenhang mit spezifischen Werkstoffeigenschaften stehen.

Basierend auf diesen Grundlagen gelingt es durch die Erfindung, die Zusammenhänge zwischen den elektromagnetischen Messgrößen und den technologischen Werkstoffeigenschaften über an sich bekannte Auswerteverfahren bei Proben mit bekannten Materialkennwerten systematisch zu erfassen und zur Kalibrierung des Meßsystems zu verwenden.

Die Verwendung von Luftspulen bewirkt zwar ein größeres Streufeld und damit eine schlechtere Einkopplung des Erregerfeldes in den Prüfkörper, dafür wird das Messergebnis aber nicht durch die Werkstoffeigenschaften von Spulenkernen beeinflusst, sondern ausschließlich durch den Prüfkörper selbst.

Erfindungsgemäß wird das Messsignal mit einem Kompensationssignal aus einem Anteil des gegenphasigen Erregersignals kompensiert, um einen Teil der in der Amplitude gegenüber den Harmonischen sehr hohen Grundwelle im Messsignal zu dämpfen und damit die Harmonischen besser aus dem Gesamtsignal analysieren zu können.

Das Kompensationssignal wird vorzugsweise über eine Kompensationsspule gewonnen, die vom Prüfort weiter als die Messspule beabstandet ist und mit der Erregerspule oder einer weiteren gleichartigen Hilfserregerspule gekoppelt ist.

Da die Messspule nicht nur das vom Prüfobjekt beeinflusste Signal erfasst, sondern im wesentlichen die in der Amplitude sehr viel höhere Grundwelle von der Erregerspule induziert wird, gelingt eine sehr effektive Kompensation der Grundwelle durch die Kompensationsspule, in die ebenfalls die Grundwelle, nicht aber oder nur sehr viel schwächer die durch das Prüfobjekt erzeugten Harmonischen. Dabei werden natürlich nur die in Phase mit der Erregerspule liegenden Signalanteile kompensiert, nicht aber eventuelle Anteile einer durch den Einfluss des Prüfkörpers phasenverschobenen Grundwelle.

Die Variante mit der Hilfserregerspule ermöglicht eine Kompensation auch dann, wenn durch die Form des Prüfobjektes und damit durch die Form der Spulen es nicht möglich ist, eine Kompensationsspule, die mit der Erregerspule gekoppelt ist, weiter vom Prüfobjekt entfernt anzuordnen, als die Messspule. Dies ist z.B. bei stab- oder rohrförmigen Prüfobjekten der Fall, bei denen die Erregerspule und die Messspule das Prüfobjekt ringförmig umschließen.

Bei der Prüfung können mehrere Messzyklen mit unterschiedlichen Magnetisierungsfeldstärken durchgeführt werden.

Außerdem kann das Spulensystem im Multifrequenzbetrieb von 10 Hz bis 10 kHz betrieben werden.

Die bei unterschiedlichen Magnetisierungsfeldstärken und/oder mehreren Frequenzen ermittelten Messwertreihen können ferner Korrelations- und/oder Gruppenanalyse- und/oder Regressionsverfahren und/oder Verfahren der Mustererkennung wie Fuzzy-Logik oder Neuronale Netze unterzogen werden.

Da das Messsignal bei ferromagnetischen Materialien in Abhängigkeit von der Frequenz und der magnetischen Feldstärke von der Form der durchlaufenen Hystereseschleife abhängt, können durch Nichtlinearitäten in der Hystereseschleife unterschiedliche Anteile der Harmonischen mit unterschiedlichen Phasenverschiebungen generiert werden, die bei gemeinsamer Auswertung umfassend den Materialzustand charakterisieren und dadurch die voneinander unabhängige Angabe mehrerer Materialkennwerte ermöglichen.

Die Verwendung unterschiedlicher Frequenzen gestattet darüber hinaus noch die Prüfung unterschiedlicher Schichtdicken. Ferner kann die Wahl einer höheren Frequenz erforderlich sein, wenn dynamische Messungen beispielsweise bei kontinuierlich gefertigten Materialien vorgenommen werden sollen.

Bei einer derartigen Auswertung der Messwerte lassen sich folgende Materialeigenschaften bestimmen: mechanische Festigkeits-Kennwerte, technologische Material-Kennwerte, plastische Verformungen, Zug-, Druck- und Eigenspannungen, Legierungselemente, Gefügeausbildungen sowie Härte-Kennwerte und Zähigkeitseigenschaften.

Vorzugsweise sind zur Messung von rohr- oder stangenförmigen Objekten die Tastspulen als Durchlaufspulen oder Segmentspulen ausgebildet.

Hierdurch wird eine sehr enge Kopplung der Spulen mit dem Prüfobjekt erzielt. Dabei wird jeweils ein Längenabschnitt des Querschnittes des Prüfobjektes erfasst. Allerdings ist hier eine Kompensation schwer durchzuführen, da die Kompensationsspule anders ausgebildet sein müsste als die Messspule, wenn sie nicht ebenfalls die Harmonischen des Prüfobjekts empfangen sollte. Um diesen Nachteil zu umgehen, kann eine Kompensation mit einer Hilfserregerspule räumlich getrennt vom Prüfobjekt vorgenommen werden.

Zur Messung von Objekten mit räumlichen Funktionsflächen können die Tastspulen auch als Formspulen ausgebildet sein.

Es wird so erreicht, dass die Einkopplung des magnetischen Feldes in das Prüfobjekt möglichst eng und gezielt an den zu prüfenden Stellen vorgenommen werden kann und damit das Messergebnis möglichst wenig von anderen Bereichen des Prüfobjektes beeinflusst wird.

Zur hochauflösenden Messung von Bereichen an Objekten können die Tastspulen auch als kleine Formspulen ausgebildet sein.

Hier gelingt es ebenso, gezielt die interessierenden Bereiche des Prüfobjektes für die Messung zu selektieren ohne andere störende Bereiche in die Messung einzubeziehen.

Gemäß einer Weiterbildung können zur Messung von flachen Objekten, z. B. Blechen, Tastspulen in Aufsatztechnik verwendet werden.

Gerade bei flachen Objekten ist ein gleich bleibender Abstand zwischen den Tastspulen und der Objektoberfläche wichtig, um durch eine konstante Kopplung reproduzierbare Ergebnisse zu erzielen. Durch die Tastspulen in Aufsatztechnik wird erreicht, dass dieser gleich bleibende Abstand gewährleistet ist und auch Kippeffekte weitgehend vermieden werden können.

Die Messwerterfassung kann an beiden Seiten des Objektes mit zwei Spulensystemen gleichzeitig erfolgen.

Durch die Messwerterfassung an beiden Seiten des Objekts mit zwei Spulensystemen gleichzeitig werden Messwertschwankungen, die durch Materialinhomogenitäten über dem Materialquerschnitt hervorrufen werden, gemittelt und gleichgewichtet bewertet und dadurch minimiert. Diese Vorgehensweise ist zeitsparender und genauer als eine Mittelung bei zwei zeitlich nacheinander von beiden Seiten her durchgeführten Messungen möglich wäre.

Als Spulensysteme für die Messung von flachen Objekten können auch gerichtete Spulensysteme mit ausgeprägten Hauptmagnetisierungsrichtungen verwendet werden.

Diese Spulensysteme gestatten es, richtungsabhängige Materialeigenschaften gezielt zu ermitteln. Diese sind besonders in der Blechherstellung und Blechverarbeitung von großer Bedeutung. Zu den wichtigen Materialeigenschaften zählen richtungsabhängige mechanische Festigkeits-Kennwerte, wie die Dehngrenze, Streckgrenze und Zugfestigkeit unter jeweils 0 Grand, 45 Grad und 90 Grad zur Walzrichtung, ferner richtungsabhängige technologische Material-Kennwerte in der Umformtechnik, wie senkrechte Anisotropie unter 0 Grad, 45 Grad, 90 Grad zur Walzrichtung, mittlere Anisotropie, planare Anisotropie, Verfestigungs-Exponent sowie bleibende plastische Verformungen in der Umformtechnik, wie richtungsabhängige Umformgrade und Veränderung der Dehngrenze.

Außerdem lassen sich auch aufgeprägte gerichtete Zug-, Druckoder Eigenspannungen erfassen und auch hier ist die Bestimmung des Kohlenstoffgehalts in niedrig- und hochlegierten C-Stählen von Bedeutung.

Bei mehreren Erreger-, Mess- und Kompensationsspulen können diese in Reihen- und/oder Differenzschaltungen und/oder Multidifferenzschaltungen verschaltet sein.

Durch diese Maßnahme lassen sich Kontakte und Steckverbindungen, die störanfällig sein können und hohe Übergangswiderstände aufweisen, weitestgehend reduzieren. Das ermöglicht besonders bei Tastspulen für hochauflösende Messungen die Baugröße gering zu halten.

Weiter kann zur Kompensation von "Abhebe-Effekten" und zur Mittelwertbildung über Materialinhomogenitäten die Messwerterfassung mit großflächigen Spulensystemen erfolgen.

Diese Spulensysteme sind besonders bei der Überwachung einer laufenden Produktion von großer Bedeutung, da reproduzierbare Ergebnisse und somit Vergleichsmöglichkeiten eröffnet werden. Auch lassen sich sehr große Flächen überwachen und dadurch eine weitgehend lückenlose Prüfung realisieren. Außerdem ist es möglich, derartige Spulensystem auch in einen Regelkreis zur automatischen Regelung bestimmter gewünschter Material-Kennwerte einzubinden.

Bevorzugt sind kombinierte Mess- und Erregerspulen zur Aufprägung von Hauptmagnetisierungsrichtungen und Erfassung richtungsabhängiger Messwerte quer zur Hauptmagnetisierungsund Erfassungsrichtung gestreckt geformt und bestehen aus einem Spulenträger mit einer Erregerspule, einer Messspule und einer Kompensationsspule in Differenzschaltung.

Es ergibt sich dann quer zu den Längsseiten der Spulen ein weitgehend homogenes Feld, das eine eindeutige Hauptmagnetisierungs- und Erfassungsrichtung aufweist. Die feste Zuordnung von Erregerspule, Messspule und Kompensationsspule in Differenzschaltung gewährleistet, dass die Magnetisierungsund Erfassungsrichtungen deckungsgleich sind und dass auch die Kopplung der Messspule mit der Erregerspule einerseits sowie der Kompensationsspule mit der Erregerspule andererseits mit umgekehrten Vorzeichen gleich sind und damit eine möglichst gute Kompensation der Grundwelle erfolgt.

Bei hohen Anforderungen an die Messgenauigkeit kann eine Minimierung von Störeinflüssen, Elektronikdrift-, Temperaturund Abstandseffekten über eine Stabilisierung der Erregung durch die parallele messtechnische Erfassung und Regelung des Erregerstromes und/oder einen Bezug der Harmonischen-Messwerte auf den parallel gemessenen Erregerstrom erreicht werden.

Mit gleichem Ziel kann auch eine auf die erste Harmonische des Messsignals, nämlich die Prüffrequenz, bezogene, relative Höherharmonische des Messsignals als Messgrößen verwendet werden.

Nachfolgend wird die Erfindung anhand der Zeichnung erläutert. In der Zeichnung zeigen:
- Fig. 1: ein Schaubild des Zusammenhangs von Werkstoffzustand, mechanischen Eigenschaften und physikalischen Eigenschaften,
- Fig. 2: grafische Darstellungen von Magnetisierungshysteresen bei Kaltverformung und Kohlenstoffgehalt, der Magnetisierungsenergie in Abhängigkeit der Korngröße sowie der Ausbildung der Magnetisierungs-Hysteresekurven bei ferritischem und perlitischem Gefüge.
- Fig. 3: ein Blockschaltbild einer Meßvorrichtung,
- Fig. 4: grafische Darstellungen der Signale der Meßvorrichtung,
- Fig. 5: eine Skizze eines Spulensystems für flache Prüfobjekte,
- Fig. 6: eine Skizze eines Spulensystems für rohroder stabförmige Prüfobjekte,
- Fig. 7: Messgrößen der Harmonischen-Analyse als Funktion der Materialeigenschaften,
- Fig. 8: Schaubilder mit einer mathematischen Darstellung der Regressionsanalyse,
- Fig. 9 - 16: weitere grafische Darstellungen von mechanischen oder technologischen Kenngrößen als Funktion von Messgrößen.

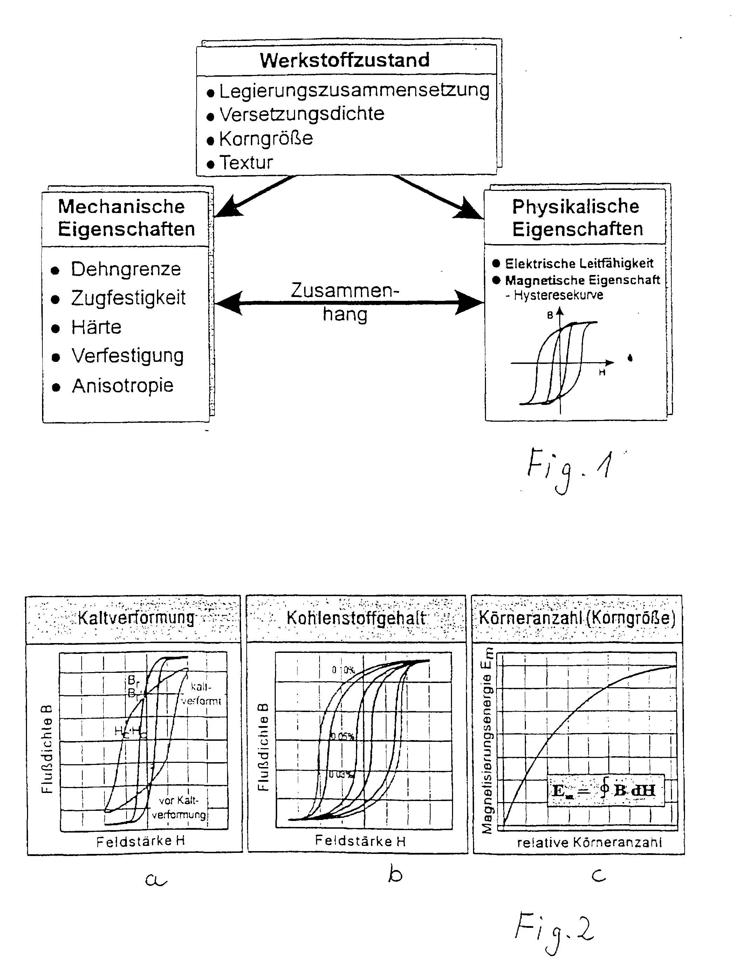

Fig. 1 zeigt ein Schaubild des Zusammenhangs von Werkstoffzustand und mechanischen Eigenschaften eines Prüfobjektes einerseits und den resultierenden physikalischen Eigenschaften andererseits. Als mechanische Eigenschaften sind aufgeführt Dehngrenze, Zugfestigkeit, Härte, Verfestigung und Anisotropie. Als Werkstoffzustand sind aufgeführt Legierungszusammensetzung, Versetzungsdichte, Korngröße und Textur. Hiervon werden als physikalische Eigenschaften die elektrische Leitfähigkeit und magnetische Eigenschaft beeinflusst. Bei der vorliegenden Erfindung werden die elektrischen und die magnetischen Eigenschaften ausgewertet, denn die erste Harmonische des Messsignals wird sowohl durch elektrische als auch durch magnetische Eigenschaften geprägt.

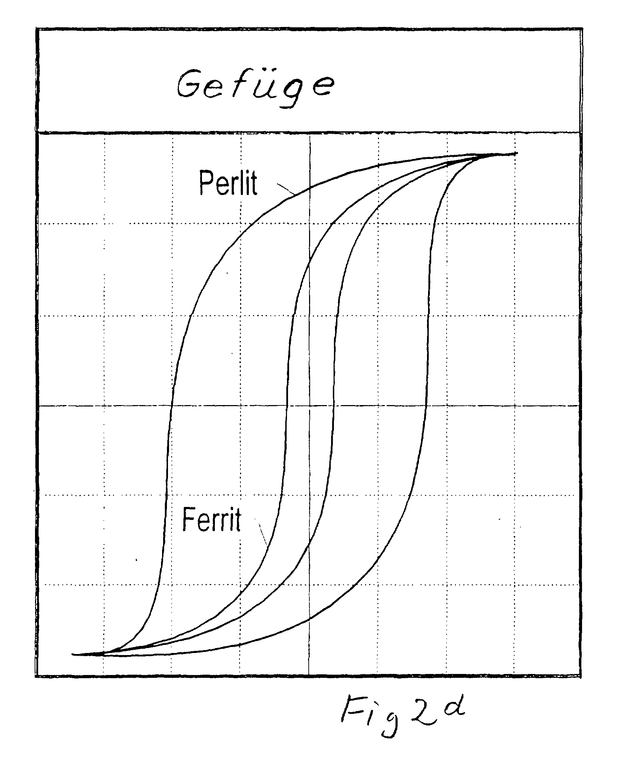

Fig. 2 zeigt als Beispiele für die Einflüsse von mechanischen Eigenschaften und dem Werkstoffzustand in Fig. 2a eine Hysteresekurve, wie sie durch Kaltverformung verändert wird, in Fig. 2b eine Hysteresekurve, wie sie durch unterschiedlichen Kohlenstoffgehalt verändert wird, in Fig. 2c eine Darstellung, wie die Korngröße bzw. Körneranzahl die erforderliche Magnetisierungsenergie beeinflusst und in Fig. 2d den Einfluss eines ferritischen oder perlitischen Gefüges auf die Ausbildung der Hysteresekurve.

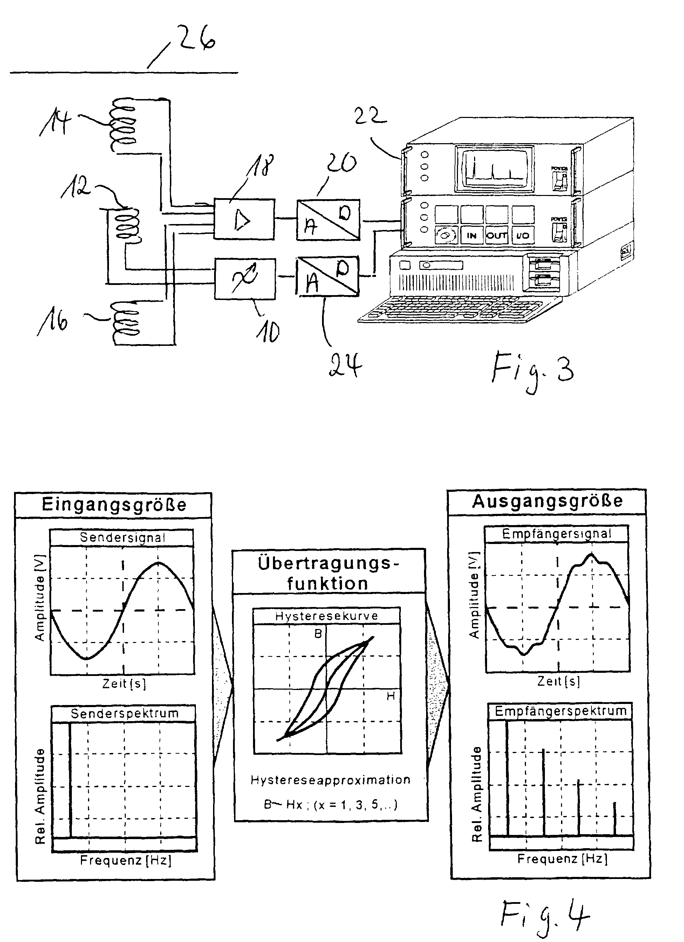

In Fig. 3 ist ein Blockschaltbild einer Meßvorrichtung nach der Erfindung dargestellt. Die Meßvorrichtung besteht aus einem Erregersystem und einem Meßsystem. Das Erregersystem umfasst einen Signalgenerator 10, der ein Sinussignal mit unterschiedlicher Amplitude und Frequenz erzeugen kann und eine oder mehrere Erregerspulen 12. Das Meßsystem umfasst eine Messspule 14 und eine Kompensationsspule 16, oder mehrere Messspulen und Kompensationsspulen, die mit den Erregerspulen gekoppelt sind. Die zweite Alternative ermöglicht eine Parallelmessung bei hohen Anforderungen an Genauigkeit. Daran schließen sich ein oder zwei Verstärker 18, ein oder zwei A-nalog/Digitalwandler 20 und ein Rechner 22 an. Auch das Signal des Signalgenerators 10 kann zu Zwecken einer Kompensation oder Kalibrierung über einen weiteren Analog/Digitalwandler 24 dem Rechner 22 zugeführt werden. Der Rechner 22 führt eine Fouriertransformation und eine Signalanalyse durch und berechnet aus einer Vielzahl von Messgrößen über eine Kalibrierung die mechanisch-technologischen Eigenschaften des Messobjekts.

In Fig. 4 sind hierzu grafische Darstellungen der Signale der Meßvorrichtung gezeigt. Der Signalgenerator erzeugt ein Sinussignal, das im Zeitbereich als Sinuskurve und im Frequenzbereich als einzelne Spektrallinie dargestellt ist. Dieses Sinussignal wird durch Beeinflussung des Prüfobjekts als Übertragungsfunktion die die Form einer Hysteresekurve besitzt, verzerrt. Als Ergebnis enthält das Messsignal neben der zum Erregersignal phasenverschobenen Grundwelle mehrere der zur Grundwelle des Messsignals phasenverschobene Harmonische. Die Grundwelle und diese Harmonischen werden nun bei einer oder verschiedenen Frequenzen und Signalamplituden des Erregersystems erfasst und ausgewertet.

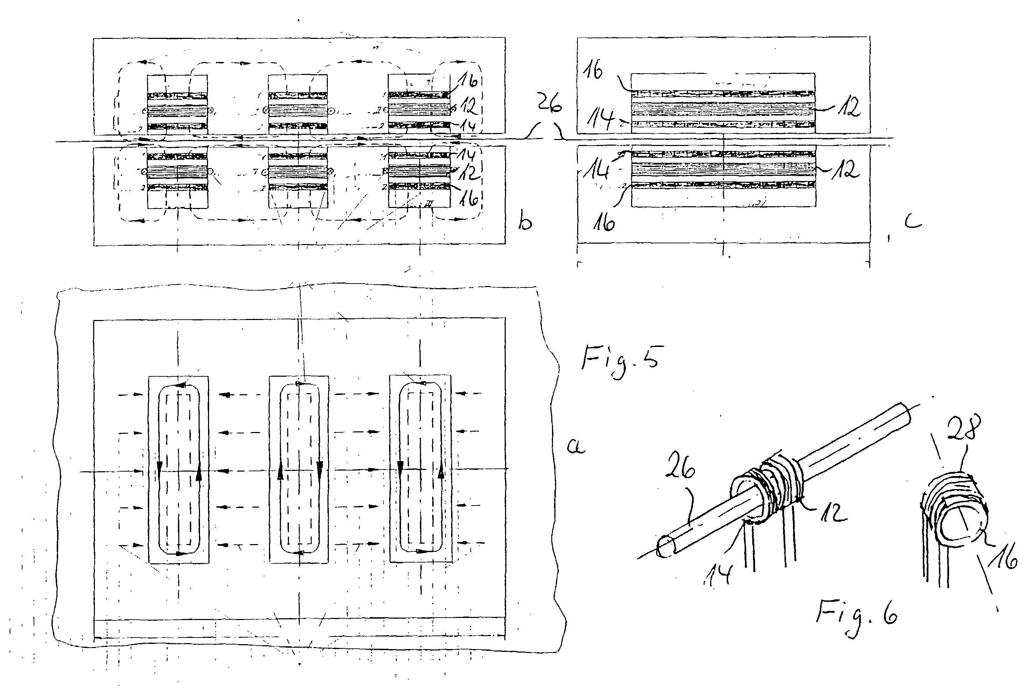

Fig. 5 zeigt eine Skizze eines Spulensystems für flache Prüfobjekte. Flache Prüfobjekte sind z.B. Bleche, wie sie für vielfältige Aufgaben unter anderem bei der Karosserieherstellung verwendet werden.

Das hier dargestellte Spulensystem arbeitet mit Spulen, die ein gerichtetes Feld erzeugen bzw. auswerten. Außerdem ist das Spulensystem paarig auf beiden Seiten des Prüfobjekts vorhanden. Fig. 5a zeigt hier eine Draufsicht auf das Spulensystem, wobei die Pfeile innerhalb der Spulen die Stromrichtung darstellen und die gestrichelten Linien den Feldverlauf. Es zeigt sich, dass der Feldverlauf quer zur Längsseite der Spulen verläuft.

Fig. 5b zeigt einen Querschnitt, wobei oberhalb und unterhalb des Prüfobjektes gleichartige Spulen angeordnet sind. Diese bestehen jeweils aus einer Erregerspule 12, einer dem Messobjekt 26 benachbarten Messspule 14 und einer vom Prüfort entfernten Kompensationsspule 16. Auch hier ist wieder durch gestrichelte Pfeile der Verlauf des Magnetfeldes dargestellt. Die Kompensationsspule 16 und die Messspule 14 sind gegenphasig mit dem Messverstärker verbunden, so dass das von der Erregerspule in beide Spulen induzierte Feld in der Grundwelle kompensiert wird. Dagegen wirken sich Phasenverschiebungen und/oder Harmonische, die durch die von dem Prüfobjekt verursachten Feldverzerrungen herrühren, überwiegend auf die Messspule aus, die dem Messobjekt am Prüfort benachbart ist.

Durch die Dämpfung der Grundwelle nimmt der Anteil der Harmonischen am Gesamtsignal zu, so dass sich deren Anteile, insbesondere auch die Anteile höherer Harmonischen, besser auswerten lassen. Fig. 5c zeigt schließlich noch einen Querschnitt in Querrichtung zur Fig. 5b auf die Längsseite der Spulen.

Fig. 6 zeigt eine Skizze eines Spulensystems für rohr- oder stabförmige Prüfobjekte. Hierbei handelt es sich um eine zylindrische Erregerspule 12 und ebenfalls zylindrische Messspule 14, die als Durchlaufspulen oder Segmentspulen ausgebildet sind. Das heißt, dass das Prüfobjekt 26 bei der Prüfung axial durch die Spule hindurch geschoben wird oder entlang der Spule geführt wird.

Eine Kompensationsspule symmetrisch zur Erregerspule würde hier versagen, da sie gleichzeitig auch die Harmonischen aufnehmen würde. Stattdessen wird die Kompensation so durchgeführt, dass eine Hilfserregerspule 28 vom Messort entfernt angeordnet ist, die im Aufbau der Erregerspule 12 entspricht und die Kompensationsspule 14 mit der Hilfserregerspule 28 gekoppelt ist. Die Messwerterfassung erfolgt dabei im Fremdoder Luftvergleich zwischen Mess- und Kompensationsspule.

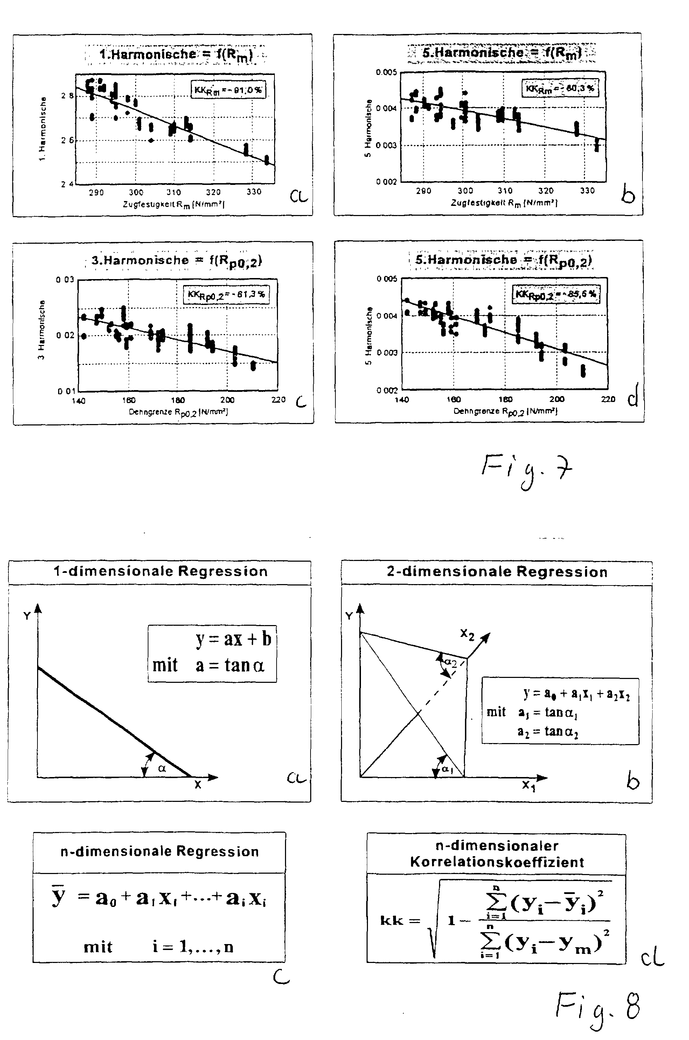

Fig. 7 zeigt eine Darstellung von Messgrößen der Harmonischen Analyse als Funktion der Materialeigenschaften. In Fig. 7a sind Messwerte der ersten Harmonischen in Abhängigkeit der Zugfestigkeit dargestellt. In Fig. 7b sind Messwerte der fünften Harmonischen in Abhängigkeit der Zugfestigkeit dargestellt. Dabei zeigt sich deutlich ein bestehender linearer Zusammenhang zwischen den elektromagnetischen Eigenschaften und den mechanischen Festigkeitseigenschaften und damit zwischen den elektromagnetischen Messgrößen und den technologischen Zielgrößen. In Fig. 7c ist die Abhängigkeit der dritten Harmonischen von der Dehngrenze und in Fig. 7d die Abhängigkeit der fünften Harmonischen von der Dehngrenze dargestellt.

Aus dem Vergleich dieser Schaubilder wird deutlich, dass die Auswertung einer Harmonischen nicht ausreicht, um mehrere Einflussgrößen, z.B. hier die Zugfestigkeit und die Dehngrenze voneinander zu unterscheiden. Dies wird erst durch die gemeinsame Auswertung mehrerer Harmonischer ermöglicht. Wie die Darstellung der Fig. 7 zeigt, werden meist nur einzelne Messpunkte ermittelt, da sich mit den zerstörenden Prüfverfahren oft nur diskrete Werte, und nur selten Kurven ermitteln lassen. Um nun aus den diskreten Messwerten einen Zusammenhang in Form einer Funktion zu gewinnen, wird bei der Erfindung eine ein- oder mehrdimensionale Regressionsanalyse durchgeführt. Die mathematische Darstellung der Regressionsanalyse ist hierzu in Fig. 8 am Beispiel einer eindimensionalen Regression, zweidimensionalen Regression und n-dimensionalen Regression mit einem n-dimensionalen Korrelationskoeffizienten dargestellt.

Bestehen keine funktionalen Zusammenhänge können auch Verfahren der Mustererkennung wie Fuzzy-Logik und Neuronale Netze angewendet werden.

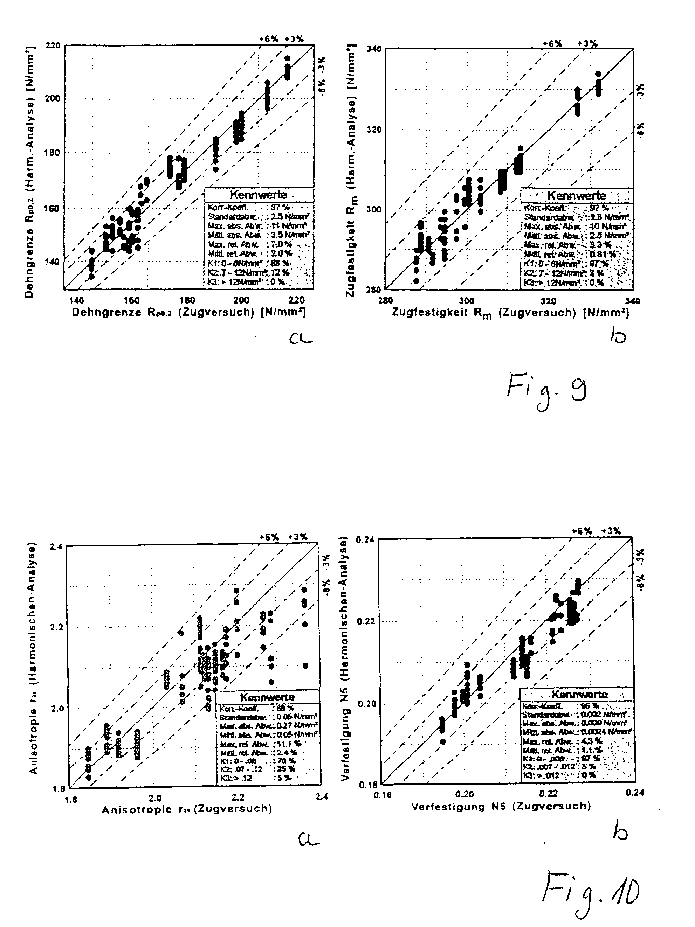

Fig. 9 zeigt das Ergebnis einer mehrdimensionalen Regression mit mechanischen Festigkeitskennwerten, und zwar in Fig. 9a die Dehngrenze nach der harmonischen Analyse gegenübergestellt der Dehngrenze, wie diese im Zugversuch ermittelt wurde, in Fig. 9b die Zugfestigkeit nach der harmonischen Analyse gegenüber der Zugfestigkeit im Zugversuch.

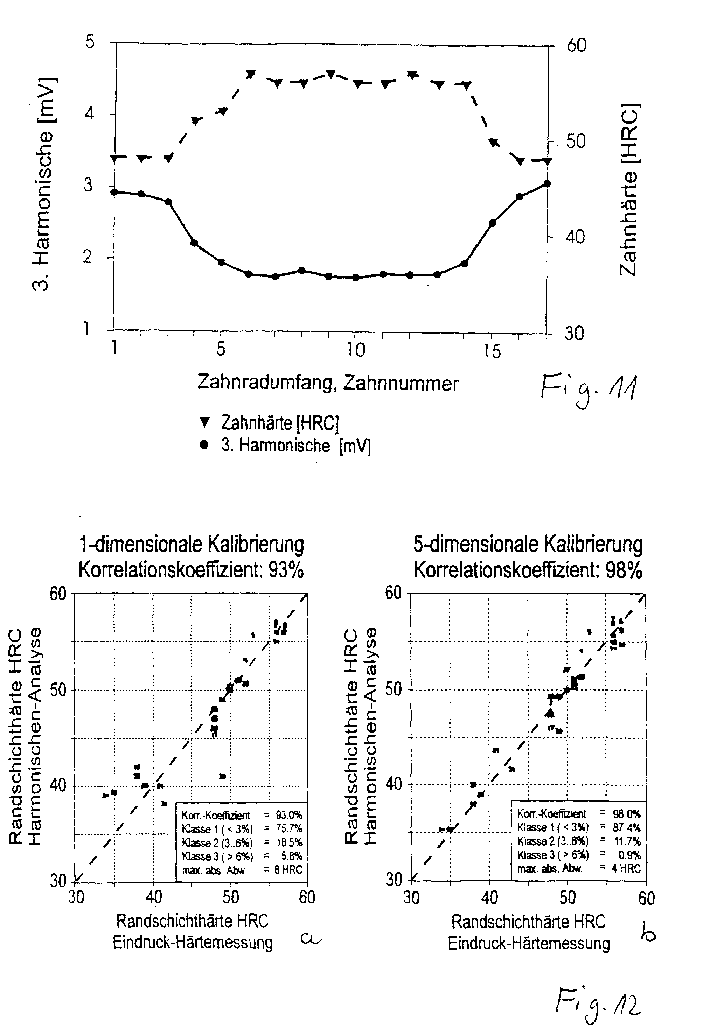

Fig. 10a zeigt das Ergebnis einer mehrdimensionalen Regression mit technologischen Werkstoffeigenschaften bei ST14-Feinblechen. Hier ist in Fig. 10a die Anisotropie mit der harmonischen Analyse gegenüber der Anisotropie im Zugversuch aufgetragen und Fig. 10b die Verfestigung n5 nach der harmonischen Analyse gegenüber der Verfestigung n5 im Zugversuch.

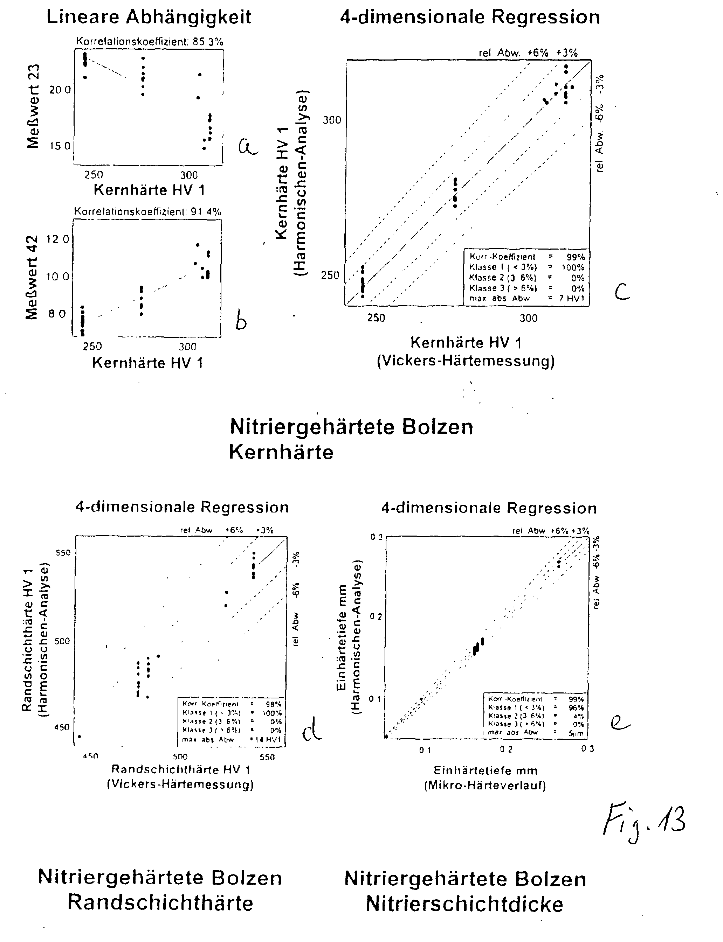

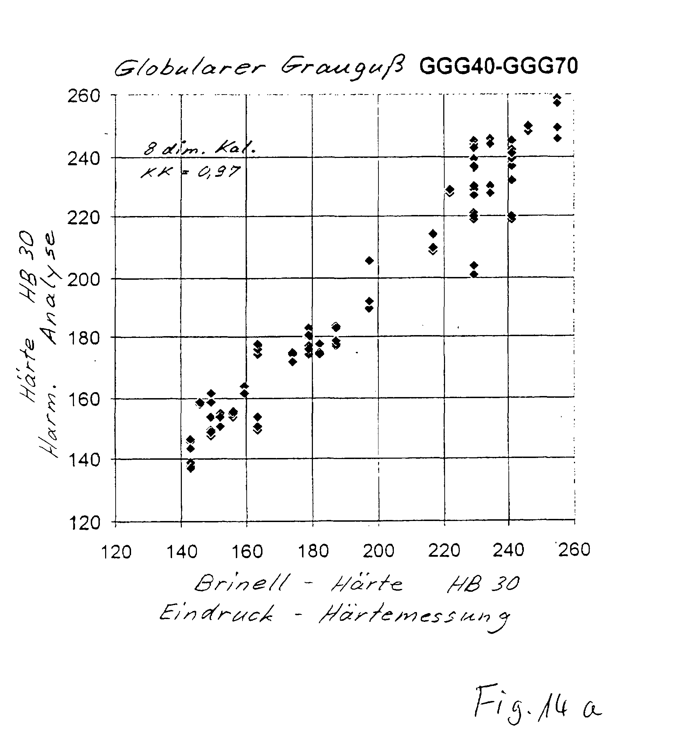

Die Fig. 11 und 12 veranschaulichen, dass auch die Härte durch das erfindungsgemäße Meßverfahren sehr genau zu erfassen ist. So zeigt Fig. 11 am Beispiel eines Zahnrades über den Zahnradumfang aufgetragen den Verlauf der dritten Harmonischen, dargestellt durch verbundene Kreise und Verlauf der Zahnhärte dargestellt durch verbundene Dreiecke.

Fig. 12 zeigt an zwei Beispielen eine Systemkalibrierung der Verzahnungshärtemessung. In Fig. 12a und Fig. 12b ist über der Randschichthärtemessung nach der Eindruck-Härtemessungsmethode die Randschichthärte nach der harmonischen Analyse aufgetragen. Dabei wurde in Fig. 12a eine eindimensionale Kalibrierung, in Fig. 12b eine fünfdimensionale Kalibrierung durchgeführt. Der Korrelationskoeffizient bei der eindimensionalen Kalibrierung liegt bereits bei 93 %, der der fünfdimensionalen Kalibrierung erreicht sogar 98 %.

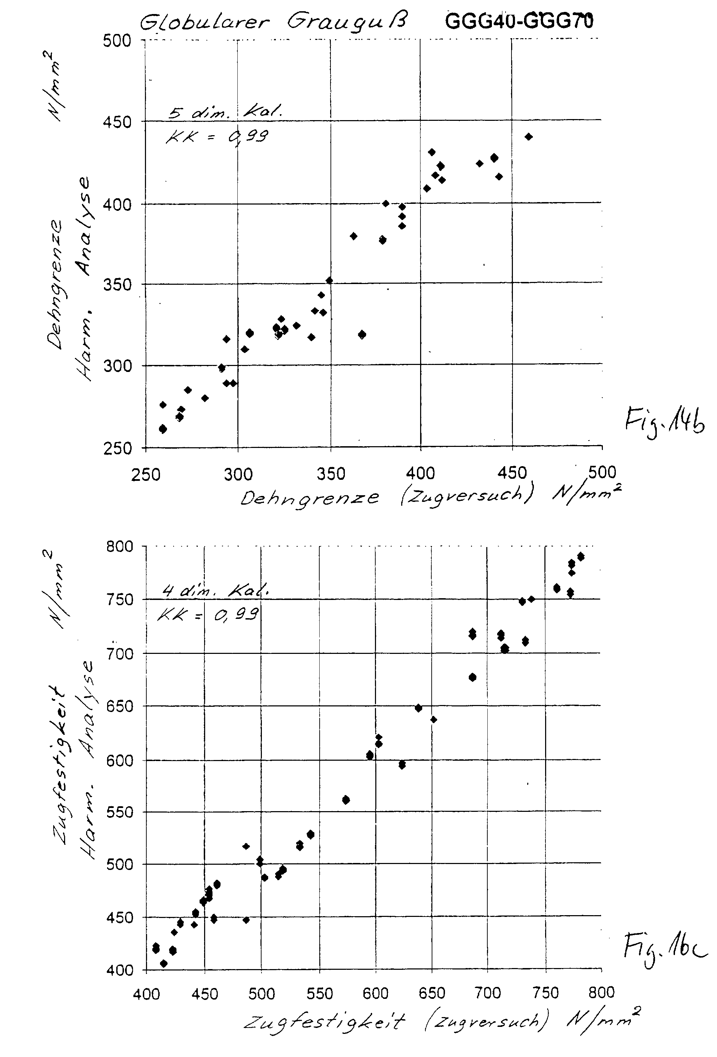

Fig. 13a bis e zeigen Diagramme des Zusammenhangs zwischen konventioneller Härtebestimmung und der Harmonischen Analyse an einem Anwendungsbeispiel mit nitriergehärtete Bolzen, an denen gute Ergebnisse bei der Kernhärtebestimmung unter Verwendung von vier Messgrößen der harmonischen Analyse erzielt wurden. Ähnlich gute Ergebnisse lassen sich auch bei der Härtemessung der Kernhärte nitriergehärteter Bolzen sowie der Randschichthärte und der Nitrierschichtdicke erzielen.

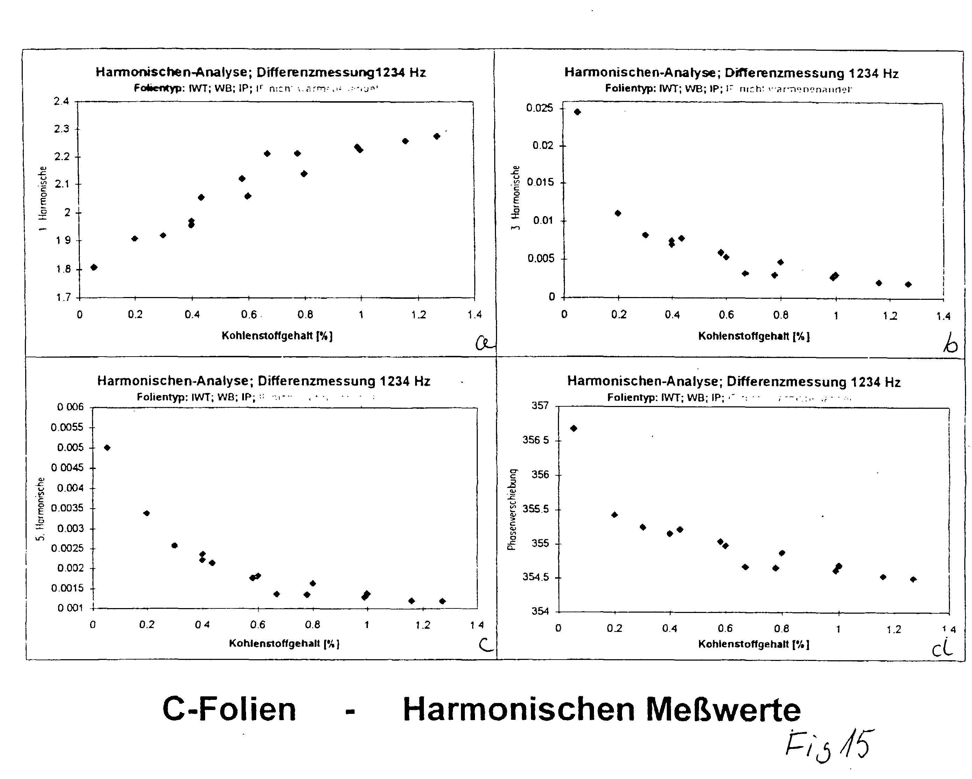

Fig. 14a bis c zeigen Diagramme von Messungen an Gussteilen aus globularem Grauguss, bei denen mit Hilfe des Messverfahrens und einer mehrdimensionalen Regression unter Verwendung von fünf bis acht Messgrößen gute Ergebnisse bezüglich der Brinell-Härte, der Dehngrenze und der Zugfestigkeit mit Korrelations-Koeffizienten von 97 % bis 99 % zerstörungsfrei erreicht werden. Die Gefügeausbildung und die technologischen Eigenschaften dieser Gusslegierungen werden dabei über die Legierungselemente z. B. den Kupfergehalt (Cu) eingestellt, was zu einer Verschiebung insbesondere des Ferrit- und Perlitanteils im Gefüge führt. Dieses eröffnet Möglichkeiten, die erforderlichen zerstörenden Prüfungen parallel zur Gussteilfertigung durch eine schnellere, zerstörungsfreie und kostengünstigere Prüfung zu ersetzen. Weiterhin bestehen damit Möglichkeiten, erforderliche Materialkennwerte nicht parallel zur Gussteilfertigung durch zerstörende Prüfungen an speziellen Proben sondern direkt am aktuellen Gussteil an relevanten Gussteilbereichen zerstörungsfrei zu gewinnen.

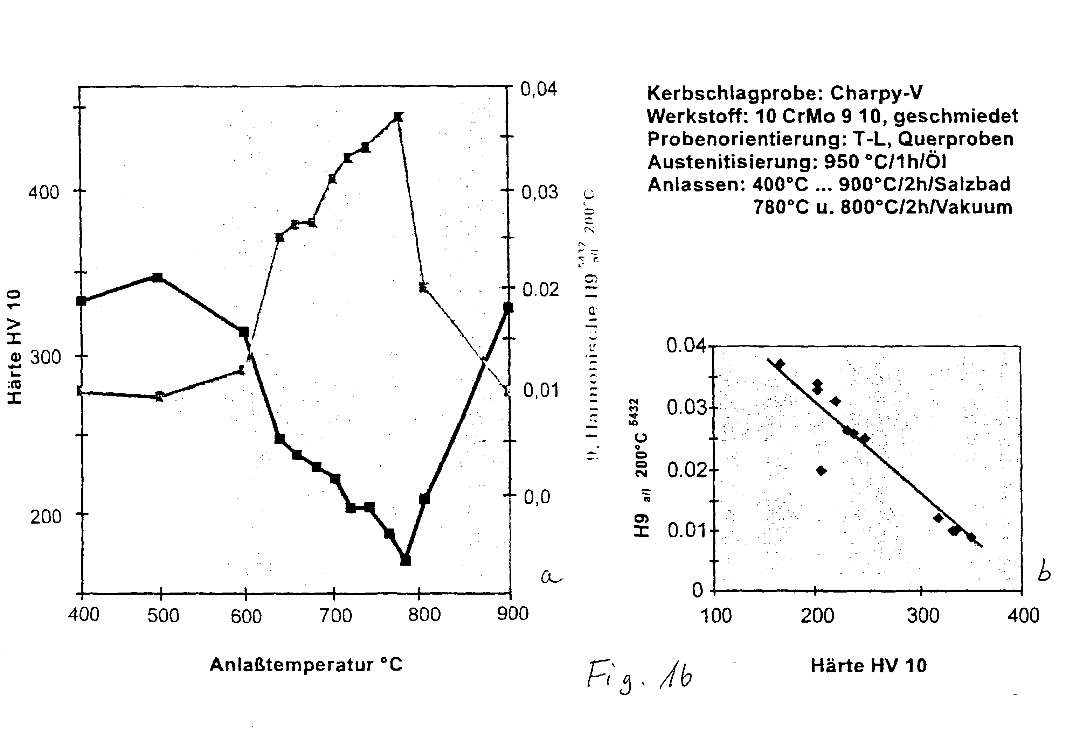

Ein weiteres Anwendungsgebiet ist die Bestimmung des Kohlenstoffgehaltes, als C-Gehalt bezeichnet, in Stahlfolien, wie diese beim Aufkohlen von Maschinenbauteilen durch Einsatzhärten zur Überwachung des C-Pegels in der Aufkohlungsatmosphäre im Glühofen eingesetzt werden. Die Bestimmung des C-Gehaltes in diesen Stahlfolien erfolgt derzeit durch Wiegen oder Verbrennen über eine Gewichtsänderung und den Energiegehalt der Folien. Fig. 15a bis d zeigen den funktionalen Zusammenhang zwischen dem C-Gehalt der Stahlfolie und mehreren Harmonischen Messwerten. Durch eine Verknüpfung mehrerer Harmonischer Messwerte lassen sich auch hier hohe Messgenauigkeiten bezüglich des C-Gehaltes in Stahlfolien mit Hilfe dieses zerstörungsfreien Messverfahrens erreichen. Das Meßverfahren bietet Möglichkeiten zur schnelleren C-Pegelbestimmung während der Aufkohlungsphase und damit zur Beeinflussung, wie Steuerung oder Regelung des Aufkohlungsprozesses und damit auch zur Qualitätssicherung.

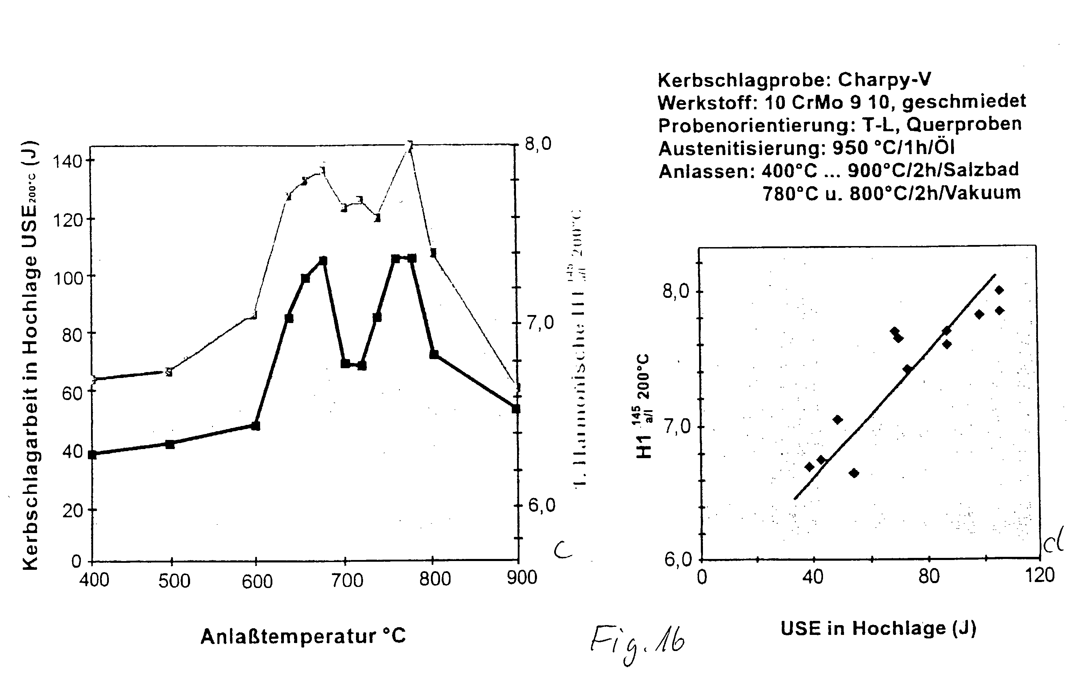

Ein zusätzliches Anwendungsgebiet ist die Bestimmung von Zähigkeitseigenschaften wie die Kerbschlagarbeit in der Hochlage oder die Übergangstemperatur bei ferromagnetischen Werkstoffen. In Fig. 16a bis d ist dargestellt, dass ähnlich wie zwischen der mechanischen Härte und Harmonischen Messwerten, auch zwischen den Zähigkeitskennwerten z. B. der Kerbschlagarbeit in der Hochlage und den Harmonischen Messwerten gute Korrelationen bestehen. Damit eröffnen sich Möglichkeiten, Zähigkeitseigenschaften, für die derzeit umfangreiche zerstörende Prüfungen an einer Vielzahl von Proben notwendig sind, wie z. B. die Kerbschlagarbeit in der Hochlage oder die Übergangstemperatur, mit Hilfe des Messverfahrens zerstörungsfrei auch am relevanten Bauteil zu bestimmen.

## Patentansprüche

1. Verfahren zur Prüfung von Halbzeugen und Maschinenbauteilen aus ferromagnetischen Werkstoffen unter Analyse von Wirbelstromsignalen, wobei über ein kombiniertes Spulensystem aus wenigstens einer Erreger-, wenigstens einer Mess- und wenigstens einer Kompensationsspule ein Erregersignal und ein Kompensationssignal zugeführt werden und ein Messsignal erfasst und ausgewertet wird, wobei eine Materialcharakterisierung durch eine Wirbelstromprüfung mit einem sinusförmigen Erregersignal auf wenigstens einer Frequenz und gemeinsamer Analyse mehrerer der entstehenden ungeraden Harmonischen des Erregersignals sowie dessen Phasenverschiebungen vorgenommen wird, wobei der Erregerspule das sinusförmige Erregersignal zugeführt wird und **dadurch gekennzeichnet, dass** der Kompensationsspule ein als Kompensationssignal dienender gegenphasiger Anteil des Erregersignals zugeführt wird und ein die Grundfrequenz des sinusförmigen Erregersignals umfassender Anteil eines von der Messspule erfassten Messsignals mit dem Kompensationssignal kompensiert wird.

2. Verfahren nach Anspruch 1, **dadurch gekennzeichnet, dass** ein oder mehrere Messzyklen mit unterschiedlichen Magnetisierungsfeldstärken durchgeführt werden.

3. Verfahren Anspruch 1 oder 2, **dadurch gekennzeichnet, dass** das Spulensystem im Multifrequenzbetrieb von 10 Hz bis 10 kHz betrieben wird.

4. Verfahren nach einem der Ansprüche 1 bis 3, **dadurch gekennzeichnet, dass** die bei unterschiedlichen Magnetisierungsfeldstärken und/oder mehreren Frequenzen ermittelten Messwertreihen Korrelations- und/oder Gruppenanalyse- und/oder Regressionsverfahren und/oder Verfahren der Mustererkennung, wie Fuzzy-Logik oder Neuronale Netze unterzogen werden.

5. Verfahren nach einem der Ansprüche 1 bis 4, **dadurch gekennzeichnet, dass** zur Minimierung der Einflüsse von Störungen, Eletronikdrift-, Temperatur- und Abstandseffekten, eine auf die erste Harmonische des Messsignals, nämlich die Prüffrequenz, bezogene, relative Höherharmonische des Messsignals als Messgröße verwendet werden.

6. Verfahren nach einem der Ansprüche 1 bis 5, **dadurch gekennzeichnet, dass** die Messung von flachen Objekten mit Tastspulen in Aufsatztechnik vorgenommen wird.

7. Verfahren nach Anspruch 6, **dadurch gekennzeichnet, dass** die Messwerterfassung an beiden Seiten des Objektes mit zwei Spulensystemen gleichzeitig vorgenommen wird.

8. Vorrichtung zur Prüfung von Halbzeugen und Maschinenbauteilen aus ferromagnetischen Werkstoffen unter Analyse von Wirbelstromsignalen, bestehend aus einer Erregervorrichtung und einer Messvorrichtung, die ein kombiniertes Spulensystem aus wenigstens einer Erreger-, wenigstens einer Mess- und wenigstens einer Kompensationsspule umfassen und als Luftspulen ohne Spulenkern ausgebildet sind, wobei durch die Erregervorrichtung ein sinusförmiges Erregersignal auf wenigstens einer Frequenz erzeugbar ist und mittels der Messvorrichtung zur Erfassung und Auswertung durch gemeinsame Analyse mehrerer der entstehenden ungeraden Harmonischen des Erregersignals sowie dessen Phasenverschiebungen eine Materialcharakterisierung vornehmbar ist, **dadurch gekennzeichnet, dass** der Kompensationsspule ein als Kompensationssignal dienender gegenphasiger Anteil des Erregersignals zugeführt ist, der ein die Grundfrequenz des sinusförmigen Erregersignals umfassender Anteil eines von der Messspule erfassten Messsignals mit dem Kompensationssignal kompensiert.

9. Vorrichtung nach Anspruch 8, **dadurch gekennzeichnet, dass** die Kompensationsspule vom Messort weiter als die Messspule beabstandet ist und mit der Erregerspule oder einer weiteren gleichartigen Hilfserregerspule gekoppelt ist.

10. Vorrichtung nach Anspruch 8 oder 9, **dadurch gekennzeichnet, dass** zur Messung von rohr- oder stangenförmigen Objekten die Tastspulen als Durchlaufspulen oder Segmentspulen ausgebildet sind.

11. Vorrichtung nach Anspruch 8 oder 9, **dadurch gekennzeichnet, dass** zur Messung von profilierten Objekten die Tastspulen als Formspulen ausgebildet sind.

12. Vorrichtung nach einem der Ansprüche 8 bis 11, **dadurch gekennzeichnet, dass** zur hochauflösenden Messung von Bereichen an Objekten die Tastspulen als kleine Formspulen ausgebildet sind.

13. Vorrichtung nach Anspruch 8 oder 9, **dadurch gekennzeichnet, dass** zur Messung von flachen Objekten die Tastspulen als Spulen in Aufsatztechnik gebildet sind.

14. Vorrichtung nach Anspruch 13, **dadurch gekennzeichnet, dass** zur gleichzeitigen Messwerterfassung an beiden Seiten des Objektes zwei Spulensysteme angeordnet sind.

15. Vorrichtung nach Anspruch 13 oder 14, **dadurch gekennzeichnet, dass** die Spulensysteme gerichtete Spulensysteme mit ausgeprägten Hauptmagnetisierungsrichtungen sind.

16. Vorrichtung nach einem der Ansprüche 13 bis 15, **dadurch gekennzeichnet, dass** bei mehreren Erreger-, Mess- und Kompensationsspulen diese in Reihen- und/oder Differenzschaltungen und/oder Multidifferenz verschaltet sind.

17. Vorrichtung nach einem der Ansprüche 13 bis 16, **dadurch gekennzeichnet, dass** zur Kompensation von "Abhebe-Effekten" sowie zur Mittelwertbildung über Materialinhomogenitäten und Minimierung von Messwertschwankungen die Spulensysteme großflächig ausgebildet sind und aus einzelnen Luftspulen mit einer Erregerspule, einer Messspule und einer Kompensationsspule in Differenzschaltung bestehen.

18. Vorrichtung nach einem der Ansprüche 13 bis 17, **dadurch gekennzeichnet, dass** kombinierte Mess- und Erregerspulen zur Aufprägung von Hauptmagnetisierungsrichtungen und Erfassung richtungsabhängiger Messwerte quer zur Hauptmagnetisierungsund Erfassungsrichtung gestreckt geformt sind und aus einem Spulenträger mit einer Erregerspule, einer Messspule und einer Kompensationsspule in Differenzschaltung bestehen.

## Claims

1. Method for taking semifinished products and machine components made from ferromagnetic materials accompanied by the analysis of eddy current signals, in which by means of a combined coil system of at least one excitation coil, at least one measuring coil and at least one compensating coil, an excitation signal and a compensation signal are supplied and a measured signal is detected and evaluated, a material characterization taking place through eddy current testing with a sinusoidal excitation signal on at least one frequency and joint analysis of several of the resulting odd harmonics of the excitation signal and the phase shifts thereof, the sinusoidal excitation signal being supplied to the excitation coil, **characterized in that** to the compensation coil is supplied the opposite phase portion of the excitation signal serving as a compensation signal and a portion comprising the fundamental frequency of the sinusoidal excitation signal of a measured signal detected by the measuring coil is compensated with the compensation signal.

2. Method according to claim 1, **characterized in that** one or more measurement cycles are performed with different magnetization field strengths.

3. Method according to claim 1 or 2, **characterized in that** the coil system is operated in multifrequency operation from 10 Hz to 10 kHz.

4. Method according to one of the claims 1 to 3, **characterized in that** the measured value or data series determined at different magnetization field strengths and/or several frequencies are subject to correlation and/or group analysis and/or regression methods and/or pattern recognition methods such as fuzzy logic or neuron networks.

5. Method according to one of the claims 1 to 4, **characterized in that** for minimizing influences of interference, electronic drift, temperature and distance effects, the measured quantity is constituted by a relative higher harmonic of the measured signal related to the first harmonic of the measured signal, namely the test frequency.

6. Method according to one of the claims 1 to 5, **characterized in that** flat objects are measured using probe coils in top technology.

7. Method according to claim 6, **characterized in that** data acquisition is simultaneously performed with two coil systems on both sides of the object.

8. Device for testing semifinished products and machine components made from ferromagnetic materials accompanied by the analysis of eddy current signals, comprising an exciting device and a measuring device, which have a combined coil system of at least one excitation coil, at least one measuring coil and at least one compensation coil and which are constructed as air-cure coils without a coil core, in which by means of the exciting device a sinusoidal excitation signal can be generated on at least one frequency and by means of the measuring device a material characterization can be carried out for detection and evaluation by the joint analysis of several of the resulting odd harmonics of the excitation signal and its phase shifts, **characterized in that** to the compensation coil is supplied a phase opposition portion of the excitation signal serving as the compensation signal and which compensates part of a measured signal detected by the measuring coil and comprising the fundamental frequency of the sinusoidal excitation signal with the compensation signal.

9. Device according to claim 8, **characterized in that** the compensation coil is further removed from the measurement location than the measuring coil and is coupled to the excitation coil or a further, similar auxiliary excitation coil.

10. Device according to claim 8 or 9, **characterized in that** the probe coils are constructed as continuous coils or segmental coils for the measurement of tubular or rod-like objects.

11. Device according to claim 8 or 9, **characterized in that** the probe coils are constructed as profile coils for measuring profiled objects.

12. Device according to one of the claims 8 to 11, **characterized in that** the probe coils are constructed as small profile coils for high resolution measurement of areas of objects.

13. Device according to claim 8 or 9, **characterized in that** the probe coils are in the form of top technology coils for the measurement of flat objects.

14. Device according to claim 13, **characterized in that** two coil systems are provided for simultaneous data acquisition on the two sides of the object.

15. Device according to claim 13 or 14, **characterized in that** the coil systems are directional coil systems with characteristic principal magnetization directions.

16. Device according to one of the claims 13 to 15, **characterized in that** in the case of several excitation, measuring and compensation coils, they are connected in.series and/or differential connections and/or multidifference.

17. Device according to one of the claims 13 to 16, **characterized in that** for compensating "lift-off effects" and for averaging with respect to material inhomogeneities and minimizing measured value or data fluctuations, the coil systems have a large-area construction and comprise individual air-core coils with an excitation coil, a measuring coil and a compensation coil in differential connection.

18. Device according to one of the claims 13 to 17, **characterized in that** combined measuring and excitation coils for bringing about principal magnetization directions and for the acquisition of directionally dependent data are extended at right angles to the principal magnetization and acquisition direction and comprise a coil support with an excitation coil, a measuring coil and a compensation coil in differential connection.

## Revendications

1. Procédé de contrôle de demi-produits et de pièces de construction mécanique en matières ouvrables ferromagnétiques par analyse de signaux de courant de Foucault, un signal d'excitation et un signal de compensation étant amenés et un signal de mesure étant enregistré et évalué par l'intermédiaire d'un système de bobines combinées comprenant au moins une bobine d'excitation, une bobine de mesure et une bobine de compensation, une caractérisation de matière étant effectuée par un contrôle par courant de Foucault avec un signal d'excitation sinusoïdal sur une fréquence au moins et une analyse commune de plusieurs des harmoniques impaires du signal d'excitation produites, ainsi que des décalages de phases de celui-ci étant effectués, le signal d'excitation sinusoïdal étant amené à la bobine d'excitation, **caractérisé en ce qu**'une part du signal d'excitation en opposition de phase servant de signal de compensation est amené à la bobine de compensation et qu'une part du signal de mesure enregistré par la bobine de mesure, qui comprend la fréquence de base du signal d'excitation sinusoidal, est compensée avec le signal de compensation.

2. Procédé suivant la revendication 1, **caractérisé en ce qu**'un ou plusieurs cycles de mesure sont exécutés avec différentes intensités de champs de magnétisation.

3. Procédé suivant la revendication 1 ou 2, **caractérisé en ce que** le système de bobine est exploité en service multifréquence allant de 10 Hz à 10 kHz.

4. Procédé suivant une des revendications 1 à 3, **caractérisé en ce que** les séries de valeurs de mesure enregistrées à des intensités de champs de magnétisation différentes sont soumises à des procédés d'analyse de corrélation et/ou de groupes et/ou à des procédés de régression et/ou à des procédés de reconnaissance d'échantillons, tels que la logique floue ou des réseaux neuronaux.

5. Procédé suivant une des revendications 1 à 4, **caractérisé en ce qu'**un harmonique du signal de mesure relative supérieure par rapport au premier harmonique du signal de mesure, à savoir la fréquence de contrôle, est utilisée comme grandeur de mesure pour la minimisation des influences dues aux perturbations, aux effets de dérives électroniques, effets de températures et de distances.

6. Procédé suivant une des revendications 1 à 5, **caractérisé en ce que** la mesure d'objets plats est effectuée avec des bobines exploratrices suivant le procédé d'application.

7. Procédé suivant la revendication 6, **caractérisé en ce que** l'enregistrement de la valeur de mesure sur les deux côtés de l'objet a lieu au moyen de deux systèmes à bobines simultanément

8. Dispositif de contrôle de demi-produits et de pièces de construction mécanique en matières ouvrables ferromagnétiques par analyse de signaux de courant de Foucault, comprenant un dispositif d'excitation et un dispositif de mesure, constitué d'un système de bobines combinées, composé au moins d'une bobine d'excitation, d'une bobine de mesure et d'une bobine de compensation et qui sont conçues comme bobines à air sans noyau de bobine, un signal d'excitation sinusoïdal pouvant être produit sur au moins une fréquence par le dispositif d'excitation et une caractérisation de matière pouvant avoir lieu par analyse commune de plusieurs des harmoniques impaires du signal d'excitation produites, ainsi que des décalages de phases de celui-ci au moyen du dispositif de mesure destiné à l'enregistrement et à l'évaluation, **caractérisé en ce qu**'une part en opposition de phases du signal d'excitation servant de signal de compensation est amené à la bobine de compensation, part en opposition de phase qui compense une part d'un signal de mesure enregistré par la bobine de mesure comprenant la fréquence de base du signal d'excitation sinusoïdal.

9. Dispositif suivant la revendication 8, **caractérisé en ce que** la bobine de compensation se trouve à une distance du lieu de mesure qui est supérieure à celle de la bobine de mesure et qu'elle est couplée à la bobine d'excitation ou à une autre bobine d'excitation auxiliaire similaire.

10. Dispositif suivant la revendication 8 ou 9, **caractérisé en ce que** pour la mesure d'objets en forme de tube ou de barre, les bobines exploratrices sont conçues comme bobines continues ou bobines segmentées.

11. Dispositif suivant la revendication 8 ou 9, **caractérisé en ce que** pour la mesure d'objets profilés, les bobines exploratrices sont conçues comme bobines formées.

12. Dispositif suivant une des revendications 8 à 11, **caractérisé en ce que** pour la mesure à haute résolution de zones d'objets, les bobines exploratrices sont conçues comme petites bobines formées.

13. Dispositif suivant la revendication 8 ou 9, **caractérisé en ce que** pour la mesure d'objets plats, les bobines exploratrices sont conçues comme bobines suivant la technique d'application.

14. Dispositif suivant la revendication 8 ou 9, **caractérisé en ce que** pour l'enregistrement simultané de valeurs de mesure sur les deux côtés de l'objet, deux systèmes de bobines sont disposés.

15. Dispositif suivant la revendication 13 ou 14, **caractérisé en ce que** les systèmes de bobines sont des systèmes de bobines dirigés avec des directions principales de magnétisation caractéristiques.

16. Dispositif suivant une des revendications 13 à 15, **caractérisé en ce qu**'en cas de plusieurs bobines d'excitation, de mesure et de compensation, celles-ci sont câblées à la manière d'un montage en série/et ou d'un circuit différentiateur, et/ou multidifférentiateur.

17. Dispositif suivant une des revendications 13 à 16, **caractérisé en ce que** pour la compensation d'effets de soulèvement, ainsi que pour la fixation de la moyenne par l'intermédiaire de manques d'homogénéité de la matière et pour la minimisation de variations des valeurs de mesure, les systèmes de bobines sont conçues à grande surface et se composent de bobines à air séparées avec une bobine d'excitation, une bobine de mesure et une bobine de compensation en circuit différentiateur.

18. Dispositif suivant une des revendications 13 à 17, **caractérisé en ce que** des bobines de mesure et d'excitation combinées sont formées allongées transversalement à la direction principale de magnétisation et d'enregistrement pour imprimer des directions principales de magnétisation et pour enregistrer des valeurs de mesure, qui sont dépendantes de la direction, et qu'elles comprennent un porte-bobine avec une bobine d'excitation, une bobine de mesure et une bobine de compensation en circuit différentiateur.
